# EUROPEAN PATENT APPLICATION

(11) **EP 3 338 874 A1**
(43) Date of publication of application: **27.06.2018**
(21) Application number: 17811175.3
(22) Date of filing: 03.08.2017
(51) Int. Cl.: B01D 45/16

(54) **DESULFURIZATION DUST-REMOVAL FUEL GAS PURIFICATION DEVICE**

(30) Priority: 26.10.2016 CN 201621171502 U
(71) Applicant: BEIJING ZHONGNENG NUOTAI ENERGY SAVING AND ENVIRONMENTAL PROTECTION CO., LTD., Beijing 100160 (CN)
(72) Inventor: ZHAO, Yuncai, Beijing 100160 (CN); WU, Zhengmin, Beijing 100160 (CN); WU, Minglai, Beijing 100160 (CN); TIAN, Pengcheng, Beijing 100160 (CN)
(74) Representative: Heimdal, Pär
(86) International application number: PCT/CN2017/095799
(87) International publication number: WO 2018/076877

(57) **Abstract**

The present application provides a desulfurization and dust removal flue gas purification device. The desulfurization and dust removal flue gas purification device comprises a cylinder and at least one separator arranged inside the cylinder; wherein the separator is installed on a cross section of the cylinder, and an inner surface of the cylinder is a rough surface. According to the present application, dust and tiny liquid droplets in the flue gas collide with an inner wall of a chimney for desulfurization and dust removal, which improves desulfurization efficiency.

## Description

### TECHNICAL FIELD

The present application relates to the technical field of desulfurization, and in particular, relates to a desulfurization and dust removal flue gas purification device.

### BACKGROUND

Desulfurization refers to making sulfur elements in coals to solids by using the calcium-based method or the like method to prevent generation of SO₂ during combustion. At present, the desulfurization methods may be categorized into wet desulfurization method, dry desulfurization method, and semi-dry (semi-wet) desulfurization method according to the wet or dry state of absorbers and desulfurization products during the desulfurization process. The wet desulfurization technology removes sulfur and processes desulfurization products in the wet state by using a solution or slurry containing an absorber. This method is widely applied in pollution treatment of furnace flue gases and industrial exhaust gases because of high desulfurization speed, simple equipment, high desulfurization efficiency and the like advantages.

The wet desulfurization technology generally utilizes flow of the flue gas to remove particles and small liquid droplets in the flue gas. However, a smooth inner wall of a cylinder fails to sufficiently collide with tiny dusts and tiny liquid droplets in the flowing flue gas. As a result, efficiency of desulfurization and dust removal is low.

Therefore, how to achieve desulfurization and dust removal by using collisions of dusts and tiny liquid droplets in the flue gas with an inner wall of a chimney is a technical problem to be urgently solved in the prior art.

### SUMMARY

In view of the above, the present application provides a desulfurization and dust removal flue gas purification device, which implements desulfurization and dust removal by using collisions of dusts and tiny liquid droplets in the flue gas with an inner wall of a chimney, which improves desulfurization efficiency.

The present application provides a desulfurization and dust removal flue gas purification device. The desulfurization and dust removal flue gas purification device comprises a cylinder and at least one separator arranged inside the cylinder; wherein the separator is installed on a cross section of the cylinder, and an inner surface of the cylinder is a rough surface.

In a specific embodiment of the present application, the cylinder comprises an inner cylinder and an outer cylinder, and the rough surface is an inner cylinder having a mesh structure.

In a specific embodiment of the present application, the separator is a gas cyclone.

In a specific embodiment of the present application, the gas cyclone comprises a central cylinder, a blade and a cover cylinder, wherein one end of the blade is installed on the central cylinder and the other end of the blade is enclosed by the cover cylinder.

In a specific embodiment of the present application, the central cylinder and the cylinder are concentrically arranged.

In a specific embodiment of the present application, the blade has an inclination angle of 20 to 80 degrees.

In a specific embodiment of the present application, at least two desulfurization and dust removal flue gas purification devices are used, and are vertically connected in series.

In a specific embodiment of the present application, a wash pipe is arranged between a top end of the inner cylinder and a top end of the outer cylinder.

In a specific embodiment of the present application, the wash pipe is an annular wash pipe.

In a specific embodiment of the present application, a water barrier ring is arranged on an upper end inside the cylinder.

As seen from the above technical solution, the desulfurization and dust removal flue gas purification device according to the present application comprises a cylinder and at least one separator arranged inside the cylinder; wherein the separator is installed on a cross section of the cylinder, and an inner surface of the cylinder is a rough surface. Therefore, according to the present application, since the inner surface of the cylinder is a rough surface, the inner surface may more sufficiently collide with cyclones formed by water droplets and particles in the flue gas. In this way, tiny liquid droplets, tiny dust particles, aerosols and the like in the flue gas collide with each other and are aggregated to form larger liquid droplets, which thereby improves efficiency of desulfurization and dust removal.

### BRIEF DESCRIPTION OF THE DRAWINGS

To describe technical solution according to the embodiments of the present application or in the prior art, drawings that are to be referred for description of the embodiments or the prior art are briefly described hereinafter. Apparently, the drawings described hereinafter merely illustrate some embodiments of the present application. Persons of ordinary skill in the art may also derive other drawings based on the drawings described herein.
FIG. 1 is a schematic structural view of a desulfurization and dust removal flue gas purification device according to the present application;
FIG. 2 is a schematic structural view of an inner cylinder in the desulfurization and dust removal flue gas purification device according to the present application; and
FIG. 3 is a schematic view of a gas cyclone of a separator in the desulfurization and dust removal flue gas purification device according to the present application.

### DETAILED DESCRIPTION

A desulfurization and dust removal flue gas purification device according to the present application comprises a cylinder and at least one separator arranged inside the cylinder; wherein the separator is installed on a cross section of the cylinder, and an inner surface of the cylinder is a rough surface. Therefore, according to the present application, since the inner surface of the cylinder is a rough surface, the inner surface may more sufficiently collide with cyclones formed by water droplets and particles in the flue gas. In this way, tiny liquid droplets, tiny dust particles, aerosols and the like in the flue gas collide with each other and are aggregated to form larger liquid droplets, which thereby improves efficiency of desulfurization and dust removal.

Definitely, the implementation of any technical solution of the present application does not need to achieve all the above advantages.

To make a person skilled in the art better understand the technical solutions of the present application, the technical solutions in the embodiments of the present application are described clearly and completely with reference to the accompanying drawings in the embodiments of the present application. Apparently, the described embodiments are merely some of rather than all of the embodiments of the present application. Based on the embodiments of the present application, all other embodiments derived by persons of ordinary skill in the art without any creative efforts shall fall within the protection scope of the present application.

Specific implementations of the present application are further described hereinafter with reference to drawings of the present application.

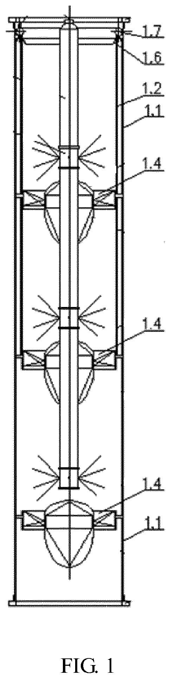

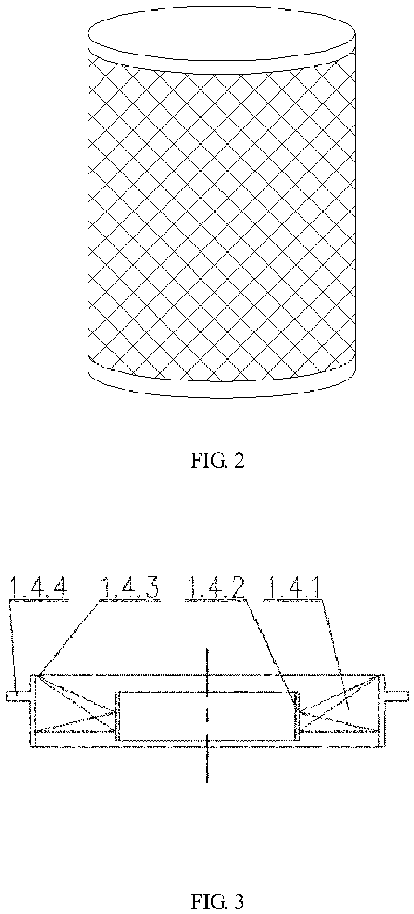

Referring to FIG. 1 to FIG. 3, the present application provides a desulfurization and dust removal flue gas purification device. The desulfurization and dust removal flue gas purification device comprises a cylinder and at least one separator 1.4 arranged inside the cylinder; wherein the separator 1.4 is installed on a cross section of the cylinder, and an inner surface of the cylinder is a rough surface.

Therefore, according to the present application, since the inner surface of the cylinder is a rough surface, the inner surface may more sufficiently collide with cyclones formed by water droplets and particles in the flue gas. In this way, tiny liquid droplets, tiny dust particles, aerosols and the like in the flue gas collide with each other and are aggregated to form larger liquid droplets, which thereby improves efficiency of desulfurization and dust removal.

In a specific embodiment of the present application, the cylinder comprises an outer cylinder 1.1 and an inner cylinder 1.2, wherein the inner cylinder 1.2 has a rough surface having a mesh structure.

In the present application, other shapes of inner cylinders 1.2 having a rough inner surface may also be used. For example, an inner cylinder 1.2 having a water corrugated structure may also be used.

The inner cylinder 1.2 having the mesh structure may sufficiently increase roughness of the inner surface of the cylinder, and is simple to install and fabricate, which improves efficiency of desulfurization and dust removal and facilitates installation and fabrication.

In a specific embodiment of the present application, the separator 1.4 is a gas cyclone. The separator is a machine which separates a mixed substance into two or more than two different substances. In the desulfurization and dust removal flue gas purification device, the separator is preferably a gas cyclone.

In a specific embodiment of the present application, the gas cyclone 1.4 comprises a gas cyclone blade, a central cylinder, a cover cylinder and an installation leg, wherein one end of the blade is installed on the central cylinder and the other end of the blade is enclosed by a cover cylinder.

In a specific embodiment of the present application, the central cylinder and the cylinder are concentrically arranged, and the blade has an inclination angle of 20 to 80 degrees. In this way, it is ensured that a better movement state is achieved during the course of introducing the flue gas.

In a specific embodiment of the present application, at least two desulfurization and dust removal flue gas purification devices are used, and are vertically connected in series.

In a specific embodiment of the present application, a fall-off passage (not illustrated in the drawings) for the liquid droplets and dusts is arranged between the outer cylinder 1.1 and the inner cylinder 1.2.

In a specific embodiment of the present application, a wash pipe 1.7 is arranged between a top end of the outer cylinder 1.1 and a top end of the inner cylinder 1.2. Specifically, the wash pipe 1.7 is an annular wash pipe.

In a specific embodiment of the present application, a water barrier ring 1.6 is arranged on an upper end inside the cylinder, which prevents the water from flowing upward along the wall of the cylinder.

Although the exemplary embodiments of the present application are described above, once knowing the basic creative concept, a person skilled in the art can make other modifications and variations to these embodiments. Therefore, the appended claims are intended to be construed as covering the preferred embodiments and all the modifications and variations falling within the scope of the present application. Obviously, a person skilled in the art can make various modifications and variations to the present application without departing from the spirit and scope of the present application. In this way, the present application is intended to cover the modifications and variations if they fall within the scope of the appended claims of the present application and equivalent technologies thereof.

## Claims

1. A desulfurization and dust removal flue gas purification device, comprising a cylinder and at least one separator arranged inside the cylinder; wherein the separator is installed on a cross section of the cylinder, and an inner surface of the cylinder is a rough surface.

2. The desulfurization and dust removal flue gas purification device according to claim 1, wherein the cylinder comprises an inner cylinder and an outer cylinder, and the inner cylinder has a rough surface having a mesh structure.

3. The desulfurization and dust removal flue gas purification device according to claim 1, wherein the separator is a gas cyclone.

4. The desulfurization and dust removal flue gas purification device according to claim 3, wherein the gas cyclone comprises a central cylinder and a blade, wherein one end of the blade is installed on the central cylinder.

5. The desulfurization and dust removal flue gas purification device according to claim 4, wherein the central cylinder and the cylinder are concentrically arranged.

6. The desulfurization and dust removal flue gas purification device according to claim 5, wherein the blade has an inclination angle of 20 to 80 degrees.

7. The desulfurization and dust removal flue gas purification device according to claim 1, wherein at least two desulfurization and dust removal flue gas purification devices are used, and are vertically connected in series.

8. The desulfurization and dust removal flue gas purification device according to claim 2, wherein a wash pipe is arranged between a top end of the inner cylinder and a top end of the outer cylinder.

9. The desulfurization and dust removal flue gas purification device according to claim 8, wherein the wash pipe is an annular wash pipe.

10. The desulfurization and dust removal flue gas purification device according to claim 1, wherein a water barrier ring is arranged on an upper end inside the cylinder.
